# EUROPEAN PATENT SPECIFICATION

(11) **EP 1 846 270 B1**
(45) Date of publication and mention of the grant of the patent: **15.10.2008**
(21) Application number: 05853832.3
(22) Date of filing: 12.12.2005
(51) Int. Cl.: B60R 21/01

(54) **VEHICLE MOUNTED AIRBAG SYSTEM**
FAHRZEUGMONTIERTES AIRBAGSYSTEM
SYSTEME DE COUSSIN GONFLABLE EMBARQUE

(30) Priority: 09.02.2005 US 54169
(43) Date of publication of application: 24.10.2007
(73) Proprietor: KEY SAFETY SYSTEMS, INC., Sterling Heights, MI 48314 (US)
(72) Inventor: WHITE, W., Craig, Grosse Pointe, Michigan 48230 (US); FISHER, John, C., Tampa, Florida 33647 (US); FORD, Brian, C., Mt. Clemens, Michigan 48043 (US); DOERING, Jason, M., Flushing, Michigan 48433 (US)
(74) Representative: Gislon, Gabriele
(86) International application number: PCT/US2005/045006
(87) International publication number: WO 2006/086062

(56) References cited:
- EP-A- 0 656 283
- US-A- 5 964 478
- US-B1- 6 260 879

## Description

The present invention relates to airbag systems that employ sensors to monitor the rate at which the airbag is deploying, and which divert inflation gas from the airbag if the airbag deployment slows prematurely, indicating the presence of an out-of-position vehicle occupant.

Airbags in combination with seatbelts and other safety systems reduce death and injury that can occur during a vehicle crash. However, if a vehicle occupant is out-of-position with respect to an airbag, it is better if the airbag does not deploy, or if deployment has begun, the deployment may be altered by diverting inflation gas from the airbag such as by venting the airbag module. One known approach is to monitor the position of the vehicle occupant with sensors within the passenger compartment and to use safety system logic to not deploy an airbag in those situations where the vehicle occupant is out-of-position. This approach has several difficulties, including that there is a time delay between when the decision to deploy is made and when the actual deployment takes place, and that during this time delay the vehicle occupant may have moved closer to the airbag, and thus may be out-of-position during actual airbag deployment. Sensors within the passenger compartment must also deal with a crash environment where noise, debris, and electromagnetic interference may make reliable detection of vehicle occupant position difficult. Furthermore, sensors within the passenger compartment are typically required to be on at all times, which consumes power and which might be objected to by the consumer.

Another approach to dealing with the out-of-position problem is to mount a sensor on the inside or outside of the airbag. One type of sensor is mounted inside the airbag and uses tapes sewn to the inside of the airbag, which are drawn out of tape cartridges such that the tapes pass by sensors which monitor the rate at which the airbag deploys by monitoring the rate at which tape is withdrawn from the cartridges. Examples of such systems are disclosed in EP 0 990 567 A1, EP 0 812 741 A1, US 2004/0174156 A1, US 6 793 243 B2, and US 6 789 819 B1. US 6260 879B1 disclose an airbag system corresponding to the preamble of claim 1. It is possible that if the vehicle occupant is too close to the airbag door, the mass and rigidity of the airbag door can cause injury to the vehicle occupant during the initial stages of the airbag deployment, before the tape sensing system has the ability to detect the out-of-position vehicle occupant.

What is needed is a means for detecting an out-of-position vehicle occupant located close to an airbag door. The present invention addresses this need by providing in accordance with claim 1 a vehicle occupant sensor, preferably using the capacitive principal, to detect an out-of-position vehicle occupant, who is located close to an airbag deployment door. The airbag module will incorporate tape sensors which monitor the rate at which the airbag is deployed, and a vent which can be actuated in the event it is determined by the airbag deployment sensor controller or system logic associated with the airbag that the airbag has prematurely collided with an object, which may be an out-of-position vehicle occupant. During the opening of the airbag deployment door(s) the weight of the door(s) can cause: the rate at which the airbag deploys slows so it cannot readily be determined if the airbag is simultaneously being slowed by the airbag door and by impact with an out-of-position vehicle occupant; and/or injury to the vehicle occupant during the initial stages of the airbag deployment caused by the mass and rigidity of the airbag deployment door(s).

The vehicle occupant sensor is used to detect, before the airbag is deployed, whether a vehicle occupant is so located close to the deployment door(s), that the opening door(s) will impact the out-of-position vehicle occupant. In the event a vehicle occupant is located close to the deployment door(s), airbag deployment is inhibited. Alternatively the airbag may still be fired, but the airbag deployment may be modified, for example by venting the airbag module at the time of initiation of the airbag inflator, or at a selected time after initiation of the airbag inflator.

FIG. 1 is a schematic, side elevation, cross-section view of the airbag module of this invention positioned behind a vehicle dash, with open airbag doors shown in phantom view.

FIG. 2 is a schematic view of a capacitive sensor used with the airbag module of FIG. 1.

FIG. 3 is a schematic view of an alternative embodiment capacitive sensor used with the airbag module of FIG. 1.

FIG. 4 is a schematic view of another alternative embodiment capacitive sensor for use with the airbag module of FIG. 1.

FIG. 5 is a schematic view of a further alternative embodiment capacitive sensor for use with the airbag module of FIG. 1.

The following patent publications teach various aspects of airbag modules and deployment systems and components thereof as well as the manufacture and operation thereof that may aid in understanding the present invention: US 6 241 282 B1; US 6 129 379 B;US 6 796 578 B2; US 2004/0178613 A1; US 2004/0178615 A1; US 6 789 818 B2; US 2004/0232673 A1; US 2004/0155442 A1; US 6 793 243 B2; US 2004/0211795 A1; US 2004/0222622 A1; US 6 825 654 B2; US 2004/0207261 A1; US 2004/0251892 A1; US 2004/0207388 A1; US 6,789,819 B1; US 6 840 539 B2; and US 6 830 265 B2.

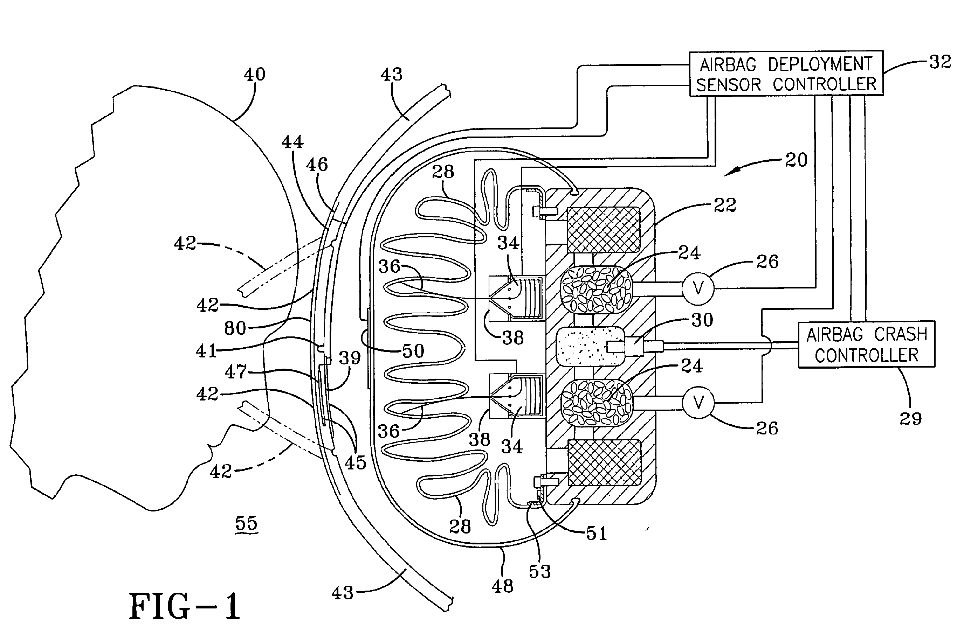

Referring to FIGS. 1 - 5, wherein like numbers refer to similar parts, an airbag module 20 is shown in FIG. 1. The airbag module 20 has an inflator module 22 that incorporates a gas generant 24, and gas vent valves 26and can incorporate stored gas. An airbag 28 is connected to the inflator module 22 so that initiation of an airbag inflator igniter 30, by an airbag crash controller 29 causes the gas generant 24 to deploy the airbag 28. The airbag module 20 has an electronic system 32 in signal receiving relation to a plurality of airbag deployment rate sensors 34. Each airbag deployment rate sensor 34 monitors airbag deployment by monitoring the rate at which a tape 36 is drawn from a cartridge 38 mounted inside the airbag 28. When the airbag 28 collides with an out-of-position vehicle occupant 40 the collision is detected by the deployment rate sensors 34 which detect the premature stopping or slowing of airbag deployment. Once premature stopping or slowing of the airbag is detected, the gas valves 26 are opened to vent inflation gas from the airbag module 28 such that gas passing through the vent does not enter the airbag.

FIG. 1 shows a vehicle occupant 40 positioned immediately in front of the doors 42, which form part of a vehicle structure 43, such as a dashboard, and through which the airbag 28 is deployed. If the doors 42, which open along a tear line 41, are sufficiently massive because they form part of the vehicle structure 43, then they will significantly slow the rate of airbag deployment. At the same time, the opening doors 42 can, because of their weight, injure an out-of-position vehicle occupant. This slowing of airbag deployment, whether an out-of-position vehicle occupant is present or not, means that the airbag deployment rate sensors may not be able to detect an impact with a vehicle occupant during a potentially injurious phase of the airbag deployment. Thus the mass of the doors 42 hides the presence of an out-of-position vehicle occupant 40 located immediately in front of the doors 42 because the airbag deployment rate sensors 34 will sense a slowdown caused by impact with the doors 42 whether or not an out-of-position vehicle occupant is present. A capacitive sensor 44 positioned on or within the material making up the door 42 can be designed to detect a large liquid-containing object such as the head or torso of a vehicle occupant. The capacitive sensor 44 may be always active, activated when the onset of a crash event is detected, or activated just before airbag deployment.

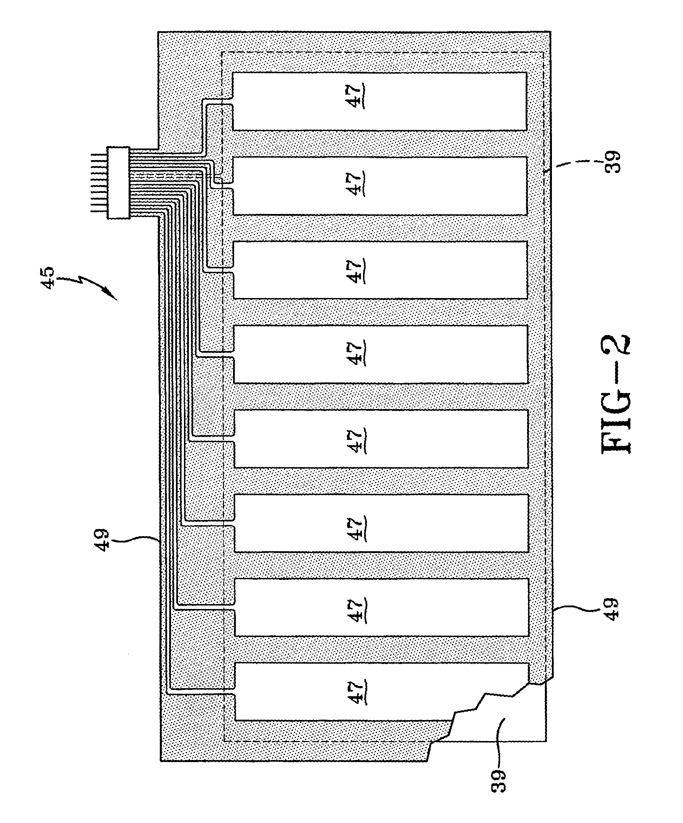

The capacitive sensor 44 may be a single metal plate, or film 46, which forms a capacitor with the vehicle ground. The out-of-position vehicle occupant 40 functions as a grounded body that affects the potential of the metal film 46 charge in a detectable way, when the head or torso of the vehicle occupant 40 is positioned within a few centimeters, e.g. about 5 - 15 cm, of the metal film 46. As shown in FIG. 2, an alternative capacitive sensor 45 may comprise a ground plane 39 and two or more adjacent electrodes 47 separated by a dielectric film to make up a series of capacitors. The presence of the out-of-position vehicle occupant 40 affects the electric field developed on the electrodes 47. In general, the charge on the capacitive plates is caused to oscillate by an oscillator at one or more selected frequencies and a change in amplitude of the oscillations is measured to detect an out-of-position vehicle occupant. The operation of the sensor 45 is described more fully in US 6 079 738 B and US 6 135 494 B. Because the range of detection needed is relatively short compared to the prior art vehicle occupant position capacitive sensors, the design of the capacitive sensor can be simpler, and the sensor can incorporate lateral position sensing.

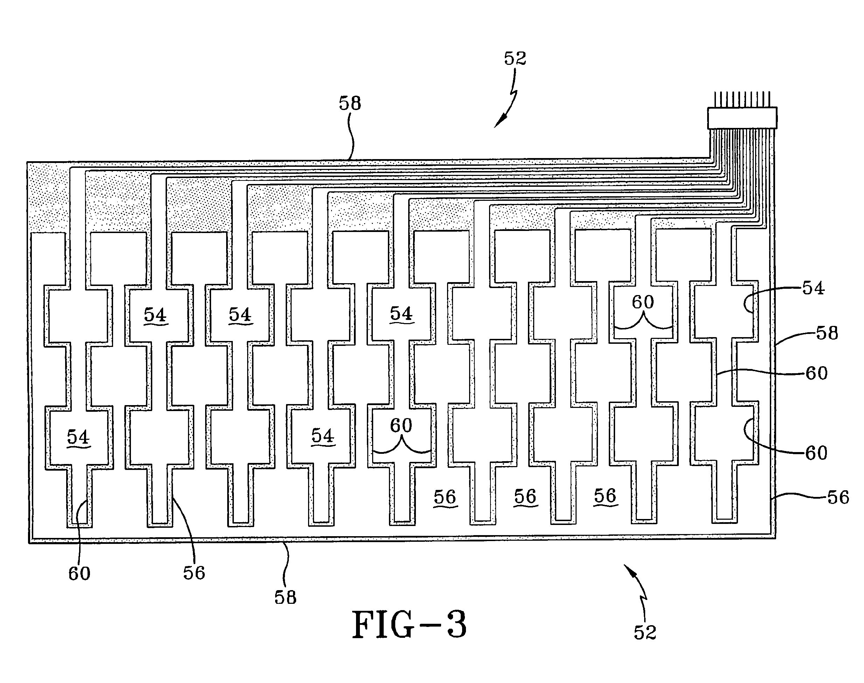

Referring to FIG. 3, a capacitive sensor 52 is shown which can detect a lateral, or side to side position, of a vehicle occupant 40. The alternative sensor 52 is made up of individual capacitive plates 54, with a floating common ground 56 therebetween. The capacitive plates 54 and the common ground 56 can be made by screen printing or otherwise printing a conductive silver ink on one side of an electrically non-conductive flexible polyester film 58. The capacitive sensor 52 has nine capacitive plates 54 arranged side-to-side. Each capacitive plate 54 comprises a plurality of connected trace portions which interdigitate with portions of the common ground 56 to increase the capacitance of each formed capacitor. A field is set up between the capacitive plates 54 and the floating ground 56. An alternating voltage is used to drive the capacitive plates 54 causing the electromagnetic field to expand and collapse between each capacitive plate 54 and the common ground 56. High dielectric objects, which include the human body which consists mostly of liquid, can be detected by the effect the dielectric object has on the electromagnetic fields formed between the capacitive plates 54 and the common ground 56. The presence of the high dielectric object in front of the sensor causes a change of the oscillation amplitude. The change in amplitude of the oscillations is identified by a circuit which may be part of the airbag deployment sensor controller 32, which may have a single threshold, or may output a varying value which is related to size and distance of the object that changes the output state of the sensor. Each capacitive plate can be driven at the same or a different frequency and individually processed by the circuit. The change in amplitude on each capacitive plate can be monitored, and compared to determine the lateral or side-to-side position of the out-of-position vehicle occupant 40 with respect to the tear line 41. The tear line 41 defines the line from which the doors 42 open to allow the airbag 28 to pass through the vehicle structure 43.

The capacitive plates 54 shown in FIG. 3 are arranged to maximize the length of the capacitive plate borders 60 by comprising multiple line segments. Increased plate border results in increased capacitance which increases the strength of the electromagnetic field created by the capacitive plates 54. The capacitive sensor 52, because it need not sense objects more than a few centimeters from the sensor, is capable of determining the lateral or side-to-side position. The sensor 54 has limited range. This simplifies the location of side-to-side position of an object with respect to the tear line 41 from which the doors 42 open.

Knowledge of the side-to-side position of the out-of-position vehicle occupant 40 allows the airbag to be deployed even if the vehicle occupant 40 is out-of-position, as long as the vehicle occupant is not immediately in front of the opening doors 42. The safety advantages of deploying an airbag can, in the right circumstances, be considerable. Therefore a sensor 52 which can provide more information about the out-of-position vehicle occupant is desirable, so that safety system logic can consider the risks of deployment, versus the risks of non-deployment, with knowledge of the specific position of the obstructing out-of-position vehicle occupant 40. Once the airbag doors 42 are open the airbag deployment rate sensors 34 are effective to detect premature impact with the out-of-position vehicle occupant 40. Thus the airbag deployment rate sensors 34 in combination with the capacitive sensor 52 allow for the following safety system logic:
1. Based on signals from crash sensors, is airbag deployment desirable?; if yes, then:
2. Check the output of the capacitive sensor 52 and determine if airbag deployment through the airbag door(s) 42 can be safely accomplished based on the output of the capacitive sensor 52. If yes, then deploy airbag; and
3. Monitor the output of the airbag deployment rate sensors 34. If the airbag 28 prematurely slows down, then divert inflation gas from the airbag using gas valves 26.

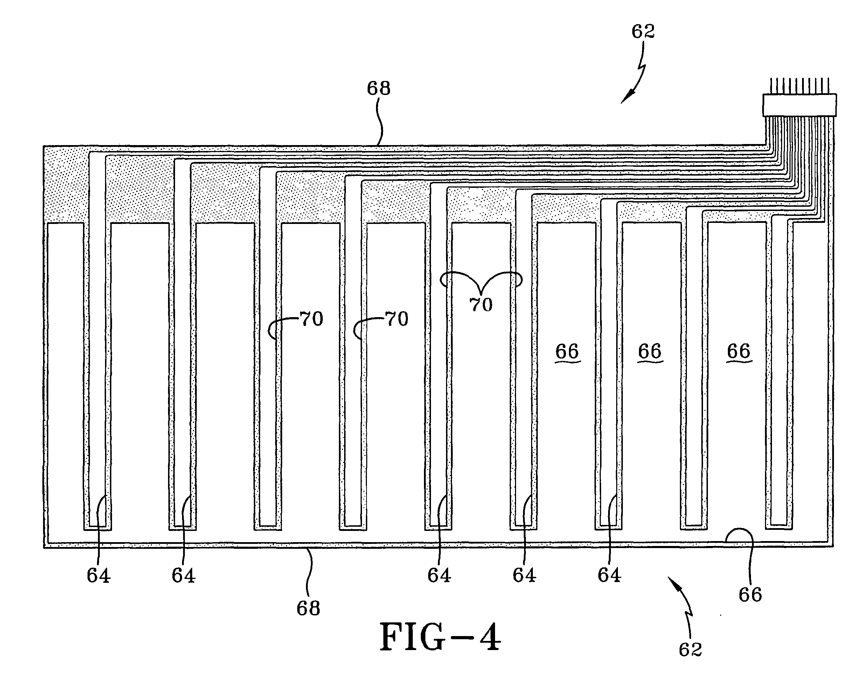

An alternative embodiment capacitive sensor 62 is shown in FIG. 4. The capacitive sensor 62 is similar to the sensor 52, having the same number of capacitive plates 64, and similarly using a floating common ground 66. Also the sensor 62 may be manufactured as a silver ink printed on a polyester film 68. The borders 70 of the capacitive plates 64 are simple straight lines.

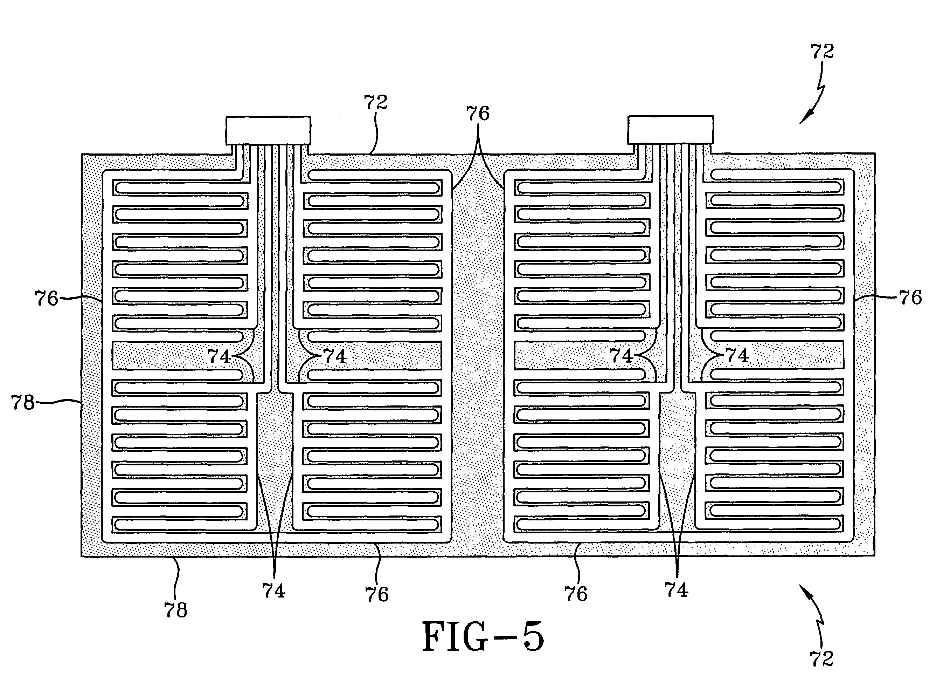

The sensors 62, 52 detect a side-to-side positioning of an out-of-position vehicle occupant, but it may be desirable to detect not only side-to-side position, but up-and-down position. The capacitive sensor 72 shown in FIG. 5 is comprised of eight individual capacitive plates 74, again surrounded by a floating common ground 76. The embodiment illustrated in FIG 4 uses interdigitating comb like structures for the individual capacitive plates 74, and the common ground 76. Again the capacitive plates 74 and common ground 76 may be constructed by printing conductive ink such as a silver-based ink on one side of a flexible polyester film 78. The capacitive sensor 72 comprises two side-by-side modules, each module being comprised of a two - by - two array of capacitive plates 74. The two modules together create a four - by - two array, which provides a side-to-side resolution which is about twice the vertical resolution. Each of the sensors 62, 52, 72 is arranged to extend across the airbag tear line 41through which the airbag 28 exits. Thus each sensor is arranged to provide highest resolution with respect to the positioning of the vehicle occupant 40 with respect to the opening doors 42 as shown in FIG. 1.

The scale of the capacitive sensors 52, 62, 72 is selected so the the range which is normally dependent on the area and shape of the individual capacitive plate, and the area and distance to the obstructing dielectric object i.e., the head of an out-of-position vehicle occupant 40. Typically the detection distance is dependent on the size of the object to be detected, and the size of the plates. In the particular embodiments described, geometry of the plates is also related to the airbag module geometry and/or the airbag door(s) geometry. Based on these and other factors, individual capacitive plates must be no more than 70 percent of the target to be sensed. In the embodiments described, individual plate sizes of the sensor 52 is about 7.6 cm by 1.9 cm, with interlaced, interdigitated grounds. The individual plate sizes of the sensor 62 are about 0.5 cm by 7.6 cm. The capacitive plates 74 of the sensor 72 are roughly squares about 3.8 cm on each side, arranged in a pattern comprising two rows and four columns. The specific geometry of the capacitive plate 74 in the embodiment described comprises conductive "fingers," about 3.8 cm long by 0.25 cm wide, with a total of 6 "fingers" per plate. Because the maximum sensing distance from the instrument panel is about 5.1 - 15.2 cm, and specific biomass sizes and lateral positions must be determined, the maximum dimensions of the plate should be no more than about 5.1 cm by 7.6 cm.

By incorporating the airbag doors 42 as part of the vehicle structure, integration with the airbag module is simplified, because a single airbag design can be used with a plurality of vehicles. However, incorporating a sensor into the doors 42 may present a problem with the desirable design goal of minimizing the interface between the vehicle design and the airbag module design. As shown in FIG. 1, a sensor positioning wrap 48 may surround the airbag 28 so as to position a capacitive sensor 50 which forms a part of the airbag module 20. Because the capacitor sensor 50 does not need to be integrated with the airbag doors 42, the same airbag module 20 can simply be reprogrammed to take into account the positioning and door geometry of a particular vehicle model. The capacitor sensor 50 can be similar to the capacitive sensor 44, 52, 62, or 72 as described above. A capacitor sensor 51 can be mounted to a retainer ring 53 which holds the airbag 28 to the inflator module 22 or a housing (not shown) to which the retainer ring 53 is mounted. The sensor 51 thus senses through the airbag 28 in addition to the doors 42, to the vehicle interior 55. The retainer ring 53 may be a plate which has openings through which gas enters the airbag 28 to cause inflation of the airbag, portions of the plate may form relatively large flat areas within the confines of the airbag which can be used for mounting sensors such as illustrated in FIGS. 2 - 5.

It should be understood that the capacitive sensor 50 could be mounted to the airbag such as shown in US 6 796 578 B2, or it can be held in place by straps instead of the sensor positioning wrap 48 shown in FIG. 1. It should be understood that the capacitive sensors 52, 62 and 72, while described as extending laterally i.e., side-to-side across the tear seam 41, depending on the design of the tear seam, and whether there is one or two doors, may be variously arranged. For example, if only one door is created by airbag deployment the array of capacitors forming the sensor may be positioned on the door side of the tear seam. Other arrangements of the array of capacitors may be required to optimize the information gathering potential of an array of capacitors and for a particular door/airbag arrangement, which will allow best prediction of the safety of deploying an airbag at least through the door, when an out-of-position vehicle occupant is detected.

It should be understood that when in the claims the vehicle occupant or capacitive sensor is described as being mounted to the airbag, this includes a physical attachment to the airbag, or being integrally formed with the airbag, or being mounted to a film which surrounds the airbag.

In general a capacitive sensor 44, 45, 52, 62, 72 can be mounted parallel to the airbag door 42 anywhere from a surface 57 of the airbag door facing the vehicle interior, to a position within the door or spaced from the door opposite the vehicle interior 55, yet within the airbag module so long as the sensor is not blocked by a high dielectric material, and where the sensor has sufficient range to extend at least about 5.1 cm past the surface of the airbag door facing the vehicle interior.

It should be understood that as used herein and in the claims the word "tape" when referring to the airbag deployment rate sensor is understood to include cloth tape, film tape, metal tape, string, wire, or other lightweight elongated structure which by being drawn past a sensor can detect the rate at which an airbag is deploying.

## Claims

1. A vehicle mounted airbag system comprising:
an airbag (28) in gas receiving relation to an inflator module (22) that includes an inflator (24);
portions of a vehicle structure forming a door (42) through which the airbag (28) passes as the airbag (28) is inflated, the door (42) defining a swing distance and a door surface facing a vehicle interior;
a capacitive sensor (44, 45, 52, 62, 72) positioned between the airbag (28) and the door surface facing the automobile interior, the capacitive sensor (44, 45, 52, 62, 72) detecting the presence of an out-of-position vehicle occupant within the swing distance of the door (42);
an electronic system (32) in signal receiving relation to the capacitive sensor (44, 45, 52, 62, 72), and in controlling relation to either the inflator (24) or the vent (26), or both, to modify airbag deployment if an out-of-position vehicle occupant is detected; **characterized by**
a vent (26) for venting gas from the inflator module (22) such that gas passing through the vent (26) does not enter the airbag (28); and at least one airbag deployment rate sensor (34) having a tape (36) that is attached to the airbag (28), so that the tape (36) is withdrawn from a cartridge (38) mounted with respect to the inflator module (22) as the airbag (28) is inflated by gas from the inflator module (22), the electronic system (32) in signal receiving relation to the at least one airbag deployment rate sensor (34) to modify airbag deployment if an out-of-position vehicle occupant is detected.

2. A vehicle mounted airbag system according to claim 1 wherein the capacitive sensor (44, 45, 52, 62, 72) is mounted to the door (42).

3. A vehicle mounted airbag system according to claim 1 wherein the capacitive sensor (44, 45, 52, 62, 72) is mounted to a retainer ring (53) mounted to the airbag system.

4. A vehicle mounted airbag system of according to claim 1 wherein the capacitive sensor (44, 45, 52, 62, 72) is mounted to the airbag (28).

5. A vehicle mounted airbag system according to claim 1 wherein the capacitive sensor (44, 45, 52, 62, 72) comprises at least one capacitive plate (54, 64, 74) mounted in an interior of the door (42).

6. A vehicle mounted airbag system according to any one of claims 1 through 5 wherein the capacitive sensor (44, 45, 52, 62, 72) comprises:
an electrically non-conductive film (36, 58, 68, 78) positioned parallel to the door (42) and not in the vehicle interior, the film having a first surface;
at least one linear array of at least four capacitive plates (54, 64, 74), the at least one linear array comprising conductive ink printed on the first surface of the film (36, 58, 68, 78);
a floating ground (56) comprising conductive ink printed on the first surface of the film (36, 58, 68, 78) and positioned between each capacitive plate (54, 64, 74) of the linear array so that each capacitive plate (54, 64, 74) forms a capacitor with the floating ground (56);
an oscillator connected to each capacitive plate (54, 64, 74) to cause an electric charge on the capacitor formed by each capacitive plate (54, 64, 74) with the floating ground (56) to oscillate;
a circuit connected across each capacitor which measures the amplitude of the oscillating electric charge on each capacitor; and
a circuit that compares said measured amplitudes.

7. A vehicle mounted airbag system according to claim 6 wherein the conductive ink contains metallic silver.

8. A vehicle mounted airbag system according to claim 6 or 7 wherein each capacitive plate (54, 64, 74) is rectangular in shape, and the common ground comprises electrically connected rectangular printed areas positioned between each capacitive plate (54, 64, 74) of the linear array of capacitive plates.

9. A vehicle mounted airbag system according to any of claims 6 through 8 wherein each capacitive plate (54, 64, 74) comprising a plurality of connected trace portions which interdigitate with portions of the common ground to increase the capacitance of each formed capacitor.

10. A vehicle mounted airbag system according to any of claims 6 through 9 wherein the at least one linear array is part of a two-dimensional array of at least four by two capacitive plates (54, 64, 74), wherein each capacitive plate forms a capacitor with the floating ground (56).

11. A vehicle mounted airbag system according to any of claims 6 through 10 wherein the at least one linear array comprises at least nine capacitive plates (54, 64, 74).

12. A vehicle mounted airbag system according to any of claims 6 through 11 wherein the capacitive plates (54, 64, 74) and the floating ground (56) are screen printed, and the conductive ink contains metallic silver.

13. A vehicle mounted airbag system according to any of claims 1 through 12 wherein the capacitive sensor (44, 45, 52, 62, 72) has an effective field of detection that does not extend substantially beyond the swing distance of the door (42).

## Patentansprüche

1. Fahrzeugmontiertes Airbag-System, umfassend:
einen Airbag (28), der vom Aufblasmodul (22), welches eine Aufblaseinrichtung (24) einschliesst, Gas erhalten kann;
Teile einer Fahrzeugstruktur, die eine Tür bilden (42) durch die der Airbag (28) hindurchgeht, wenn der Airbag (28) aufgeblasen wird, wobei die Tür (42) eine Schwingdistanz definiert und eine Türfläche dem Fahrzeuginneren gegenübersteht;
einen Kapazitivsensor (44, 45, 52, 62, 72), der zwischen dem Airbag (28) und der Türfläche, die dem Fahrzeuginneren gegenübersteht, positioniert ist, wobei der Kapazitivsensor (44, 45, 52, 62, 72) die Anwesenheit eines "out-of-position"-Fahrzeuginsassen in der Schwingdistanz der Tür (42) erkennt;
ein elektronisches System (32), das vom Kapazitivsensor (44, 45, 52, 62, 72) Signale erhalten kann, und entweder die Aufblaseinrichtung (24) oder den Ventilator (26), oder beides, steuern kann, um das Entfalten des Airbags zu verändern, wenn ein "out-of-position"-Fahrzeuginsasse erkannt wurde;
**gekennzeichnet durch:**
ein Luftloch (26), um Gas vom Aufblasmodul (22) weg zu blasen, so dass das **durch** das Luftloch (26) hindurchgeblasene Gas nicht in den Airbag (28) gelangt;
und mindestens einen Airbag-Entfaltungsgrad-Sensor (34), der ein Band (36) hat, das am Airbag (28) befestigt ist, so dass das Band (36) von einer, bezüglich dem Aufblasmodul (22) angebrachten Kartusche (38) entfernt wird, wenn der Airbag (28) vom Gas des Aufblasmoduls (22) aufgeblasen wird, wobei das elektronische System (32) vom mindestens einen Airbag-Entfaltungsfrequenz-Sensor (34) ein Signal erhält, um die Entfaltung des Airbags zu ändern, falls ein "out-of-position"-Fahrzeuginsasse erkannt wird.

2. Fahrzeugmontiertes Airbag-System nach Anspruch 1, wobei der Kapazitivsensor (44, 45, 52, 62, 72) an der Tür (42) angebracht ist.

3. Fahrzeugmontiertes Airbag-System nach Anspruch 1, wobei der Kapazitivsensor (44, 45, 52, 62, 72) an einem am Airbag-System angebrachten Haltering (53) angebracht ist.

4. Fahrzeugmontiertes Airbag-System nach Anspruch 1, wobei der Kapazitivsensor (44, 45, 52, 62, 72) am Airbag (28) angebracht ist.

5. Fahrzeugmontiertes Airbag-System nach Anspruch 1, wobei der Kapazitivsensor (44, 45, 52, 62, 72) mindestens eine Kapazitivplatte (54, 64, 74) enthält, die an einer Innenseite der Tür (42) angebracht ist.

6. Fahrzeugmontiertes Airbag-System nach irgendeinem der Ansprüche 1 bis 5, wobei der Kapazitivsensor (44, 45, 52, 62, 72) Folgendes umfasst:
einen elektrisch-nicht-leitenden Film (36, 58, 68, 78), der parallel zur Tür (42) positioniert ist und nicht im Fahrzeuginneren, wobei der Film eine erste Fläche hat;
mindestens eine geradlinige Anordnung von mindestens vier kapazitiven Platten (54, 64, 74), wobei die mindestens eine geradlinige Anordnung leitfähige Tinte umfasst, die auf der ersten Fläche des Films (36, 58, 68, 78) aufgedruckt ist;
eine schwebende Masse (56), die leitende Tinte umfasst, die auf der ersten Fläche des Films (36, 58, 68, 78) aufgedruckt ist und zwischen jeder kapazitiven Platte (54, 64, 74) der geradlinigen Anordnung positioniert ist, so dass jede kapazitive Platte (54, 64, 74) einen Kondensator mit der schwebenden Masse (56) bildet;
einen Oszillator der mit jeder kapazitiven Platte (54, 64, 74) verbunden ist, um eine elektrische Ladung auf dem Kondensator, der durch jede kapazitive Platte (54, 64, 74) gebildet wird, zu veranlassen, mit der schwebenden Masse (56) zu oszillieren;
einen Schaltkreis, der an jeden Kondensator gelegt ist und die Amplitude der oszillierenden elektrischen Ladung an jedem Kondensator misst; und
einen Schaltkreis, der die gemessenen Amplituden miteinander vergleicht.

7. Fahrzeugmontiertes Airbag-System nach Anspruch 6, wobei die leitfähige Tinte metallisches Silber enthält.

8. Fahrzeugmontiertes Airbag-System nach Anspruch 6 oder 7, wobei jede kapazitive Platte (54, 64, 74) eine rechteckige Form hat, und die gemeinsame Masse elektrisch-verbundene rechteckige gedruckte Bereiche umfasst, die zwischen jeder kapazitiven Platte (54, 64, 74) der geradlinigen Anordnung kapazitiver Platten positioniert sind.

9. Fahrzeugmontiertes Airbag-System nach irgendeinem der Ansprüche 6 bis 8, wobei jede kapazitive Platte (54, 64, 74) mehrere verbundene Spurteile umfasst, die mit Teilen der gemeinsamen Masse ineinander greifen, um die Aufnahmefähigkeit jedes geformten Kondensators zu erhöhen.

10. Fahrzeugmontiertes Airbag-System nach irgendeinem der Ansprüche 6 bis 9, wobei die mindestens eine geradlinige Anordnung Teil einer zweidimensionalen Anordnung von mindestens vier Anordnungen mal zwei kapazitive Platten (54, 64, 74) ist, wobei jede kapazitive Platte einen Kondensator mit der schwebenden Masse (56) bildet.

11. Fahrzeugmontiertes Airbag-System nach irgendeinem der Ansprüche 6 bis 10, wobei die mindestens eine geradlinige Anordnung mindestens neun kapazitive Platten (54, 64, 74) umfasst.

12. Fahrzeugmontiertes Airbag-System nach irgendeinem der Ansprüche 6 bis 11, wobei die kapazitiven Platten (54, 64, 74) und die schwebende Masse (56) siebgedruckt wird, und die leitfähige Tinte metallisches Silber enthält.

13. Fahrzeugmontiertes Airbag-System nach irgendeinem der Ansprüche 1 bis 12, wobei der Kapazitivsensor (44, 45, 52, 62, 72) ein wirksames Erkennungsfeld hat, das sich nicht substantiell über die Schwingdistanz der Tür (42) hinaus erstreckt.

## Revendications

1. Système de coussin gonflable embarqué, comprenant:
un coussin gonflable (28) de réception de gaz d'un module gonfleur (22) incluant un gonfleur (24);
des portions d'une structure de véhicule formant une porte (42) à travers laquelle le coussin gonflable (28) passe quand le coussin gonflable (28) est gonflé, la porte (42) définissant un champ d'ouverture et une surface de porte faisant face à l'intérieur du véhicule;
un senseur capacitif (44, 45, 52, 62, 72) positionné entre le coussin gonflable (28) et la surface de porte faisant face à l'intérieur de l'automobile, le senseur capacitif (44, 45, 52, 62, 72) détectant la présence d'un occupant de vehicule en position OOP (Out-Of-Position) dans le champ d'ouverture de la porte (42);
un système électronique (32) pouvant recevoir un signal du senseur capacitif (44, 45, 52, 62, 72), et contrôler soit le gonfleur (24), soit l'évent (26), ou les deux, pour modifier le déploiement du coussin gonflable si un occupant du véhicule en position OOP est détecté;
**caractérisé par** un évent (26) pour expulser le gaz du module gonfleur (22) de sorte que le gaz passant à travers l'évent (26) ne pénètre pas dans le coussin gonflable (28);
et au moins un senseur du taux de déploiement du coussin gonflable (34) ayant un ruban (36) fixé au coussin gonflable (28), de sorte que le ruban (36) est retiré d'une cartouche (38) montée sur le module gonfleur (22) lorsque le coussin gonflable (28) est gonflé par gaz du module gonfleur (22), le système électronique (32) recevant un signal du au moins un senseur du taux de déploiement du coussin gonflable (34) pour modifier le déploiement du coussin d'air si un occupant du véhicule en position OOP est détecté.

2. Système de coussin gonflable embarqué selon la revendication 1, dans lequel le senseur capacitif (44, 45, 52, 62, 72) est monté sur la porte (42).

3. Système de coussin gonflable embarqué selon la revendication 1, dans lequel le senseur capacitif (44, 45, 52, 62, 72) est monté sur une bague de retenue (53) montée sur le système de coussin gonflable.

4. Système de coussin gonflable embarqué selon la revendication 1, dans lequel le senseur capacitif (44, 45, 52, 62, 72) est monté sur le coussin gonflable (28).

5. Système de coussin gonflable embarqué selon la revendication 1, dans lequel le senseur capacitif (44, 45, 52, 62, 72) comprend au moins une plaque capacitive (54, 64, 74) montée sur un côté intérieur de la porte (42).

6. Système de coussin gonflable embarqué selon l'une quelconque des revendications 1 à 5 dans lequel le senseur capacitif (44, 45, 52, 62, 72) comprend:
un film électriquement non conducteur (36, 58, 68, 78) positionné parallèlement à la porte (42) et ne se trouvant pas à l'intérieur du véhicule, le film ayant une première surface;
au moins un arrangement linéaire d'au moins quatre plaques capacitives (54, 64, 74), le au moins un arrangement comprenant de l'encre conductrice imprimée sur la première surface du film (36, 58, 68, 78);
une masse flottante (56) comprenant de l'encre conductrice imprimée sur la première surface du film (36, 58, 68, 78) et positionnée entre chaque plaque capacitive (54, 64, 74) de l'arrangement linéaire, de sorte que chaque plaque capacitive (54, 64, 74) forme un condensateur avec la masse flottante (56);
un oscillateur connecté à chaque plaque capacitive (54, 64, 74) pour provoquer l'oscillation d'une charge électrique sur le condensateur formé par chaque plaque capacitive (54, 64, 74) avec la masse flottante (56);
un circuit connecté à travers chaque condensateur qui mesure l'amplitude de chaque charge électrique oscillante sur chaque condensateur; et
un circuit qui compare lesdites amplitudes mesurées.

7. Système de coussin gonflable embarqué selon la revendication 6 dans lequel l'encre conductrice contient de l'argent métallique.

8. Système de coussin gonflable embarqué selon la revendication 6 ou 7 dans lequel chaque plaque capacitive (54, 64, 74) est de forme rectangulaire, et la masse commune comprend des surfaces rectangulaires imprimées électriquement connectées positionnées entre chaque plaque capacitive (54, 64, 74) de l'arrangement linéaire de plaques capacitives.

9. Système de coussin gonflable embarqué selon l'une quelconque des revendications 6 à 8 dans lequel chaque plaque capacitive (54, 64, 74) comprend une pluralité de portions de trace connectées qui s'intercalent avec des portions de la masse commune pour augmenter la capacitance de chaque condensateur formé.

10. Système de coussin gonflable embarqué selon l'une quelconque des revendications 6 à 9 dans lequel l'au moins un arrangement linéaire fait partie d'un arrangement bidimensionnel d'au moins quatre arrangements par deux plaques capacitives (54, 64, 74), chaque plaque capacitive formant un condensateur avec la masse flottante (56).

11. Système de coussin gonflable embarqué selon l'une quelconque des revendications 6 à 10, dans lequel l'au moins un arrangement linéaire comprend au moins neuf plaques capacitives (54, 64, 74).

12. Système de coussin gonflable embarqué selon l'une quelconque des revendications 6 à 11 dans lequel les plaques capacitives (54, 64, 74) et la masse flottante (56) sont sérigraphiés, et l'encre conductrice contient de l'argent métallique.

13. Système de coussin gonflable embarqué selon l'une quelconque des revendications 1 à 12, dans lequel le senseur capacitif (44, 45, 52, 62, 72) a un champ de détection effectif qui ne dépasse substantiellement pas le champ d'ouverture de la porte (42).
